# DEMANDE DE BREVET EUROPEEN

(11) **EP 4 748 229 A1**
(43) Date de publication de la demande: **27.05.2026**
(21) Numéro de dépôt: 25208617.8
(22) Date de dépôt: 14.10.2025
(51) Int. Cl.: A01M 7/00

(54) **UNITÉ DE PULVÉRISATION AVEC FONCTION DE PURGE**

(30) Priorité: 08.11.2024 FR 2412263
(71) Demandeur: EXEL INDUSTRIES, 51200 Epernay (FR)
(72) Inventeur: BOUCQUEMONT, Thomas, 51130 BERGERES-LES-VERTUS (FR)
(74) Mandataire: Bandpay & Greuter

(57) **Abrégé**

La présente invention vise une unité de pulvérisation (1) sélective de liquide comprenant une arrivée de liquide (E0), une buse de pulvérisation (8), un canal de délivrance (12) s'étendant depuis l'arrivée de liquide jusqu'à la buse, en passant le cas échéant par un passage obturable (2), et le cas échéant une vanne à commande pneumatique (3) avec une chambre pneumatique (31) délimitée par une membrane (32) et alimentée par une deuxième entrée pneumatique (E2), une première entrée pneumatique (E1) raccordée au canal de délivrance via un clapet anti-retour (14), la membrane étant déplaçable entre une première position provoquant l'obturation du passage obturable et une deuxième position provoquant la libération dudit passage obturable, de sorte qu'un envoi d'air via la première entrée pneumatique permet de purger le canal de délivrance et la buse, et système de pulvérisation incluant une ou plusieurs unités de pulvérisation.

## Description

### DOMAINE TECHNIQUE

La présente invention concerne le domaine des systèmes de pulvérisation de produit qui sont utilisés dans les exploitations agricoles, notamment les exploitations viticoles ou arboricoles, mais aussi dans les exploitations de grande culture. Lesdits systèmes de pulvérisation sont utilisés pour appliquer des produits, tels que par exemple des produits phytosanitaires ou des engrais liquides, sur une végétation cible.

La végétation cible peut être d'une part des cultures de céréales, de protéagineux ou d'oléagineux, ou d'autre part des feuillages d'arbre, feuillages d'arbuste, feuillages de vigne, etc...

### ETAT DE LA TECHNIQUE

Les systèmes de pulvérisation permettent de dispenser du liquide de traitement sous forme de gouttelettes sur la végétation à traiter.

Un exploitant agricole procède habituellement à des campagnes de pulvérisation sur une ou plusieurs parcelles de culture, verger, vigne. Entre deux campagnes de pulvérisation, il est d'usage de rincer les éléments mis à contribution, à savoir la cuve de produit, la pompe, les buses, les diverses canalisations impliquées. Le rinçage est nécessaire entre deux campagnes successives d'un produit donné et à fortiori quand deux campagnes successives utilisent deux produits de traitement différents qui ne doivent pas être pollués par un résidu du produit précédent.

Toutefois, une campagne de pulvérisation peut durer plusieurs heures avec des pauses, voire s'étaler sur plusieurs jours. De plus, il existe des cas où on ne rince pas entre deux campagnes qui se succèdent dans le temps avec un intervalle de temps modéré. Il reste alors du produit liquide dans les diverses canalisations qui mènent de la pompe aux buses (en effet, dans tout circuit il existe un volume « mort » qui doit être rincé).

Dans ce domaine, il existe des systèmes de pulvérisation qui sont équipés de dispositifs dits 'stop-goutte' avec une vanne à commande pneumatique ou électrique qui isole la buse de pulvérisation du circuit de produit de traitement en amont. Dans une configuration typique, il est prévu une vanne à commande pneumatique ou électrique à proximité de chaque buse.

Lorsque la vanne à commande pneumatique ou électrique est fermée, la portion de canalisation qui se situe entre la vanne à commande pneumatique (ou électrique) et la buse est certes isolée du circuit de distribution amont, mais il reste du liquide dans cette portion de canalisation.

On constate souvent que l'orifice de la buse retient une goutte, notamment par effet de capillarité au vu du petit diamètre de l'orifice (ou des orifices).

La présence de cette goutte (ces gouttes) entraine à la longue un dépôt de matière au niveau de chaque orifice de buse.

Ceci est d'autant plus marqué que le liquide de traitement est épais et/ou visqueux. L'orifice de buse peut être plus ou moins bouché. La surface interne de la buse peut aussi être revêtue d'un dépôt qui s'accumule à la longue.

Ce dépôt finit par altérer les caractéristiques de l'orifice et finit par dégrader la qualité de la pulvérisation.

Ce phénomène nécessite un nettoyage périodique des orifices de buse. Un tel nettoyage périodique est fastidieux. De plus, un tel nettoyage peut générer un risque d'endommagement de l'orifice de la buse.

Il existe donc un besoin d'éviter la présence d'une telle goutte au niveau de l'orifice de buse dès lors que la pulvérisation est inactive pour la buse en question. Tout ou partie des buses peuvent être désactivées en fonction du scénario de pulvérisation en cours et ou des circonstances d'opération du système.

### PRESENTATION DE L'INVENTION

Dans ce contexte, la présente invention a pour objet, selon un premier aspect, une unité de pulvérisation sélective de liquide comprenant une arrivée de liquide, une buse de pulvérisation, un canal de délivrance s'étendant depuis l'arrivée de liquide jusqu'à la buse de pulvérisation, caractérisé en ce que l'unité de pulvérisation comprend une première entrée pneumatique raccordée au canal de délivrance via un clapet anti-retour, de sorte qu'un envoi d'air via la première entrée pneumatique, lorsque l'arrivée de liquide ne délivre plus de liquide, permet de purger le canal de délivrance et la buse.

Grâce à ces dispositions, il est possible de purger le volume intérieur de la buse (volume mort) et de souffler la goutte qui a pu se former au niveau de l'orifice de buse, et grâce à la purge du canal de délivrance, on évite aussi qu'une autre goutte puisse se reformer suite à des sollicitations vibratoires. Ainsi le produit de pulvérisation ne se cristallise pas sur place et la nécessite de nettoyer la buse est substantiellement diminuée.

Comme il sera vu plus en détail plus loin, il est prévu plusieurs façons de générer un flux d'air dans la première entrée pneumatique.

Il faut remarquer que le clapet anti-retour laisse passer de l'air depuis la première entrée pneumatique vers le canal de délivrance mais empêche du liquide, sous pression ou non, se trouvant dans le canal de délivrance de remonter vers la première entrée pneumatique.

On remarque que la vanne qui autorise ou interrompt sélectivement la délivrance produit liquide peut être agencée dans l'unité de pulvérisation ou peut être agencée à distance de l'unité de pulvérisation, par exemple dans une tête de tronçon qui dessert plusieurs unités de pulvérisation.

En outre, selon l'invention, le canal de délivrance s'étend depuis l'arrivée de liquide jusqu'à la buse de pulvérisation en passant par un passage obturable, et l'unité de pulvérisation comprend une vanne à commande pneumatique avec une chambre pneumatique délimitée par une membrane et alimentée en air par une deuxième entrée pneumatique, la membrane étant déplaçable entre une première position provoquant l'obturation du passage obturable et une deuxième position provoquant la libération dudit passage obturable, de sorte qu'un envoi d'air via la première entrée pneumatique lorsque le passage obturable est obturé permet de purger le canal de délivrance et la buse. La membrane est de préférence souple.

Une telle vanne à commande pneumatique s'avère fiable et bon marché. Elle supporte les contraintes physico-chimiques et l'environnement généralement rencontrés par les systèmes de pulvérisation de produit utilisés dans les exploitations agricoles et viticoles. On remarque qu'il n'y a pas d'électricité dans l'unité de pulvérisation.

On remarque que la vanne à commande pneumatique et la membrane peuvent former une configuration normalement fermée ou une configuration normalement ouverte. Dans la configuration normalement fermée, il faut fournir de l'énergie pour quitter l'état normalement fermé. Dans la configuration normalement ouverte, il faut fournir de l'énergie pour quitter l'état normalement ouvert.

De plus, on remarque que le passage obturable se trouve à proximité immédiate de la buse et par conséquent le volume mort entre le passage obturable et l'orifice de buse représente un volume relativement limité. Le volume à purger est ainsi petit, le produit gaspillé est minime, il n'est pas nécessaire de souffler un grand volume d'air pour purger le volume mort d'intérêt et d'ôter la goutte potentielle au niveau de l'orifice de la buse.

On utilise parfois dans le jargon le terme 'poumon' pour désigner la chambre pneumatique de la vanne à commande pneumatique.

Selon une réalisation, la vanne à commande pneumatique est de type normalement fermé.

Il faut apporter de l'énergie, ici pneumatique, pour ouvrir le passage et autoriser la délivrance de produit par la buse correspondante. Ceci permet de sécuriser la délivrance du produit de traitement.

Selon une réalisation, la vanne à commande pneumatique est de type normalement ouvert.

C'est la logique inverse de la précédente, quand le circuit de liquide amont est sous pression, par défaut on pulvérise, il faut exercer une commande pour ne pas pulvériser. On est ici dans une logique d'inhibition.

Selon une réalisation alternative à la vanne à commande pneumatique, l'unité de pulvérisation peut comprendre une vanne à commande électrique comprenant un piston, le piston étant déplaçable entre une première position provoquant l'obturation du passage obturable et une deuxième position provoquant la libération dudit passage obturable. On peut ainsi bénéficier de la souplesse procurée par une commande électrique.

Selon une réalisation, l'unité de pulvérisation comprend en outre un corps d'unité formant une structure sur laquelle sont fixées la buse et la vanne à commande pneumatique.

Moyennant quoi, ledit corps d'unité assure la cohésion de l'unité et la protection mécanique des composants qui sont hébergés dans le corps d'unité.

Selon une réalisation, le canal de délivrance est agencé est formé dans le corps d'unité.

Moyennant quoi, le canal de délivrance est intégré directement dans le corps d'unité ce qui augmente l'intégration de l'unité de pulvérisation et ce qui diminue son coût de revient car aucun tuyau n'est alors nécessaire pour le canal de délivrance.

La présente invention a aussi pour objet, selon un deuxième aspect, un système de pulvérisation comprenant une pluralité d'unités de pulvérisation telles que décrites précédemment et au moins une électrovanne pneumatique alimentant sélectivement en air comprimé les premières entrées pneumatiques (E1) des d'unités de pulvérisation.

L'électrovanne pneumatique en question permet de provoquer un soufflage au moment opportun après l'arrêt de la pulvérisation de liquide par la buse. C'est une commande sélective du flux d'air qui entre par la première entrée pneumatique. On remarque que cette commande sélective présente une courte durée, par exemple de 0,5 secondes à de 2 secondes.

Selon une réalisation, l'électrovanne pneumatique est une électrovanne pneumatique 3/2 avec l'orifice de purge raccordé aux premières entrées pneumatiques des unités de pulvérisation.

Dans ce cas de figure, on met à profit l'électrovanne pneumatique qui commande la vanne à commande pneumatique et on met à profit un volume d'air comprimé qui est à évacuer au moment de l'interruption de pulvérisation, volume d'air que l'on redirige (ou que l'on détourne) vers la première entrée pneumatique de l'unité de pulvérisation.

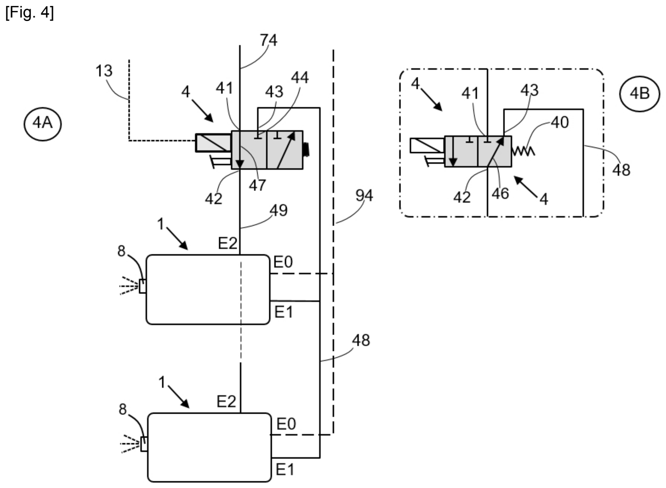

Dans ce cas de figure, la vanne à commande pneumatique est de type normalement fermé. Ceci sera exposé en détail plus loin en référence à la figure 4.

Selon une réalisation, l'électrovanne pneumatique est une électrovanne pneumatique spécifique. Ceci forme une commande souple et flexible qui peut répondre à plusieurs logiques prédéfinies, par exemple le temps de soufflage peut être paramétrable.

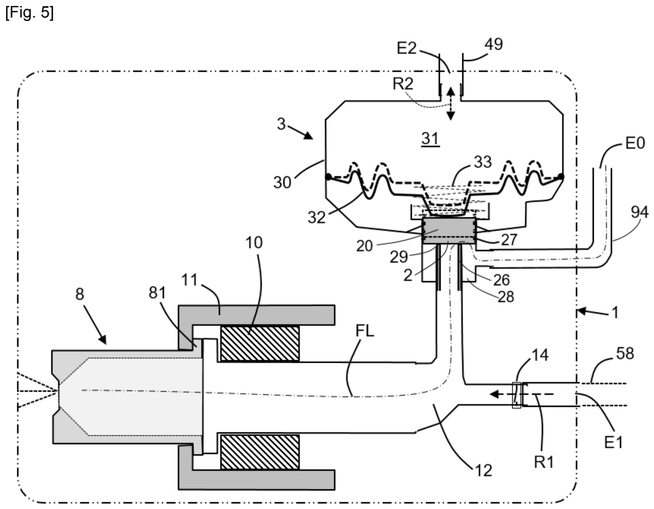

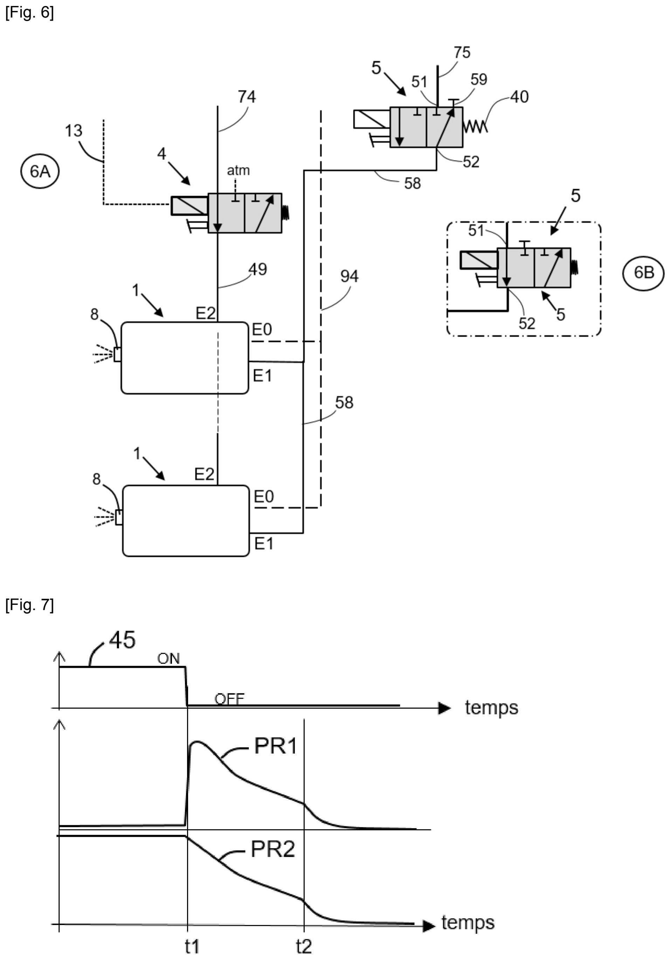

Il s'agit en pratique d'une électrovanne pneumatique spécifique pour la purge, distincte de celle qui commande le poumon. Ceci sera exposé en détail plus loin en référence aux figures 5 et 6.

Selon une réalisation, le système de pulvérisation peut comprendre plusieurs unités de pulvérisation agencées fonctionnellement en parallèle par groupes ou sous-ensembles. Ces groupes ou sous-ensembles peuvent être commandés indépendamment l'un de l'autre.

Selon une réalisation, le système de pulvérisation peut comprendre au moins une vanne de délivrance du produit de traitement. Cette vanne peut être commandée par une unité de commande qui est également en charge de piloter les vannes pneumatiques ou électriques susmentionnées, de manière à piloter de façon synchronisée et cohérente la délivrance du produit de traitement et des canalisations pneumatiques qui y sont associés.

Selon une première possibilité, la vanne de délivrance du produit liquide peut être une vanne principale agencée à distance de l'unité de pulvérisation, sans vanne d'arrêt locale à l'intérieur de l'unité de pulvérisation. Sur une deuxième possibilité, la vanne de délivrance du produit liquide se trouve à l'intérieur de l'unité de pulvérisation, et peut être complétée (ou pas) en amont par une vanne de commande collective d'un tronçon de système.

Selon une réalisation, il est prévu une vanne de délivrance du produit de traitement par groupe ou sous-ensemble. Pour chaque groupe ou sous-ensemble, l'unité de commande gère à la fois la délivrance du liquide et l'activation des commandes pneumatiques.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique en vue de d'élévation d'un exemple de système de pulvérisation à l'action dans un verger, avec six colonnes de pulvérisation, et 24 buses de pulvérisation ;
La figure 2 montre un exemple de schéma hydraulique du système de pulvérisation selon un mode de réalisation générique de la présente invention ;
La figure 3 montre schématiquement un exemple de réalisation d'une unité de pulvérisation avec une vanne en local à commande pneumatique de type normalement fermé ;
La figure 4 illustre le schéma du circuit pneumatique associé à l'exemple de réalisation d'unité de pulvérisation représenté à la figure 3 ;
La figure 5 montre schématiquement un exemple de réalisation d'une unité de pulvérisation avec une vanne en local à commande pneumatique de type normalement ouvert ;
La figure 6 illustre le schéma du circuit pneumatique associé à l'exemple de réalisation d'unité de pulvérisation représenté à la figure 5 ;
La figure 7 montre un chronogramme qui illustre un exemple d'interruption de pulvérisation et de purge dans le système représenté à la figure 4 ;
La figure 8 montre un chronogramme qui illustre un exemple d'interruption de pulvérisation et de purge dans le système représenté à la figure 6 ;
La figure 9 montre schématiquement un autre exemple de réalisation d'une unité de pulvérisation, dans une version simplifiée, la vanne de contrôle de délivrance de liquide étant située à distance.

Il faut noter que les figures exposent l'invention de manière détaillée pour permettre de mettre en œuvre l'invention ; bien que non limitatives, lesdites figures servent notamment à mieux définir l'invention le cas échéant. Pour des raisons de clarté de l'exposé, certains éléments ne sont pas nécessairement représentés à l'échelle.

### DESCRIPTION DETAILLEE DE L'INVENTION

L'invention concerne un système de pulvérisation de produit sous forme liquide, le produit étant destiné à être projeté sous forme de gouttelettes sur une végétation cible notée TV. Le produit à pulvériser peut être un produit phytosanitaire ou un engrais liquide.

Dans les exploitations de grandes cultures, la végétation cible sera typiquement des céréales, protéagineux, légumineuses, oléagineux, etc. Dans les exploitations viticoles ou arboricoles, la végétation cible sera typiquement des feuillages d'arbres ou d'arbustes ou des feuillages de vignoble. On note que la végétation cible peut être quelconque au sens de la présente invention.

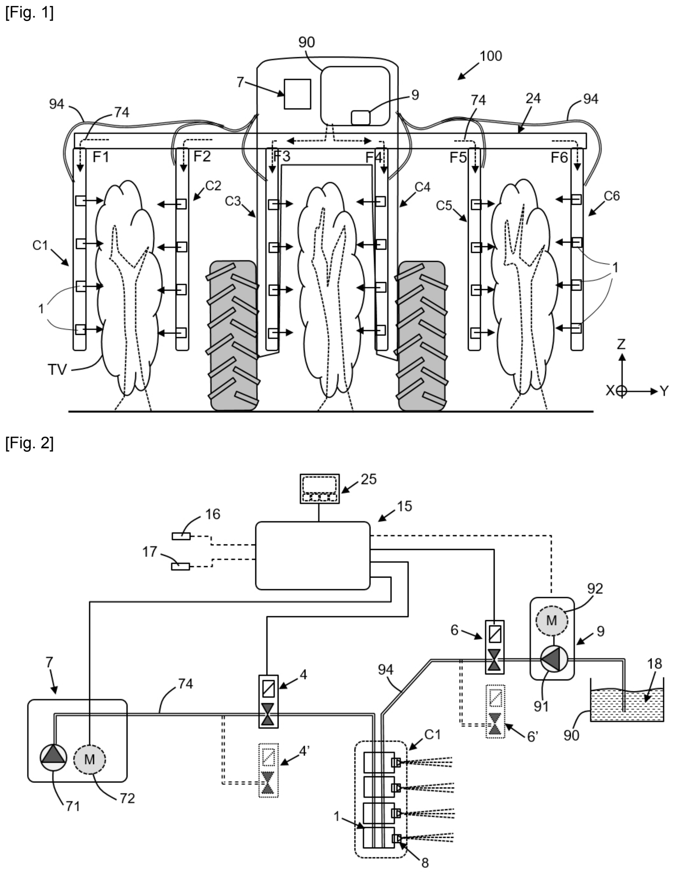

Le système de pulvérisation peut être associé à un engin agricole de type tracteur enjambeur comme à la figure 1, ou à un tracteur conventionnel. Dans un autre cas d'application, le système de pulvérisation est associé à un engin agricole traîné par un tracteur.

Par convention, on désigne la direction d'avancement de l'engin agricole par le repère **X** formant l'axe dit longitudinal, la direction transversale au déplacement longitudinal par le repère Y et la direction verticale par le repère **Z**.

Selon l'exemple illustré à la figure 1, le système de pulvérisation peut comprendre une pluralité d'ensembles de traitement, généralement agencés par paires, chaque paire étant destinée à traiter un rang de végétation. Par exemple le système peut comprendre deux ensembles de traitement pour traiter un rang de végétation ou bien 4 ensembles de traitement pour traiter 2 rangs de végétation, ou bien 6 ensembles de traitement pour traiter 3 rangs de végétation comme illustré, et cetera.

Selon l'exemple illustré à la figure 1, le système de pulvérisation comprend six colonnes de pulvérisation, respectivement repérées **C1**, **C2**, **C3**, **C4**, **C5** et **C6**. Les colonnes de pulvérisation sont supportées par une traverse de structure notée **24**. Chaque colonne de pulvérisation comprend quatre buses dans l'exemple illustré.

Chacune des colonnes peut former un tronçon pneumatique commandé sélectivement via les conduites pneumatiques respectives **F1**, **F2**, **F3**, **F4**, **F5** et **F6**.

Selon l'exemple illustré à la figure 1, en configuration d'utilisation, les ensembles de traitement s'étendent sensiblement en position verticale sur une hauteur correspondant idéalement à la hauteur de la végétation à traiter. La direction de pulvérisation de produit s'étend sensiblement à l'horizontale.

En configuration de traitement, comme visible à la figure 1, deux colonnes de pulvérisation encadrent un rang de végétation **TV** ou autrement dit un rang de végétation est interposé entre deux colonnes de pulvérisation situés en vis-à-vis l'un de l'autre, et qui pulvérisent du produit de traitement en direction de la végétation.

Selon diverses réalisations, la configuration et l'agencement géométrique des buses peut être différent. Les buses peuvent être regroupées par groupes ou sous-ensemble selon la logique d'application du produit de traitement et la végétation a traiter. Dit autrement, il est prévu plusieurs tronçons ou plusieurs parties qui peuvent être activées ou désactivées indépendamment les unes des autres.

Par exemple, dans un contexte de grandes cultures, non représenté aux figures mais très répandu, il est prévu des rampes horizontales (i.e. long bras horizontaux) en configuration d'utilisation avec des buses qui projettent le produit de traitement vers le bas. Les rampes peuvent être de type télescopique et peuvent s'étendre en configuration d'utilisation sur une grande longueur. Dans certaines conditions opérationnelles, il peut être nécessaire d'inhiber une partie des buses pour éviter de pulvériser à mauvais escient.

Chaque colonne de pulvérisation **C1-C6** comprend une pluralité de buses de pulvérisation **8**. Les buses de pulvérisation **8** sont disposées les unes à la suite des autres selon une direction verticale dans une configuration de pulvérisation, avec un espacement inter buse d'une vingtaine ou trentaine de centimètres par exemple. Selon le type de végétation à traiter, le nombre de buses par colonne peut aller par exemple de trois à dix.

Chaque buse de pulvérisation **8** est comprise dans une entité appelée unité de pulvérisation et repérée **1.**

D'une façon générique, le système de pulvérisation comprend une unité de pompage notée **9** pour pomper le produit de traitement depuis une cuve de produit **90** formant un réservoir pour le liquide de traitement **18**.

L'unité de pompage **9** comprend une pompe **91** et un moteur **92** configuré pour entraîner la pompe en rotation. Le moteur **92** peut être un moteur électrique ou un moteur hydraulique.

Il est prévu des canalisations de liquide collectivement repérées par la référence **94** pour acheminer le liquide sous pression vers les buses de pulvérisation.

Le système de pulvérisation proposé comprend un groupe électropneumatique **7**. Le groupe électropneumatique **7** comprend un compresseur **71** entraîné par un moteur **72** configuré pour entraîner le compresseur. Le moteur **72** peut être un moteur électrique ou un moteur hydraulique (auquel cas le groupe électropneumatique est un groupe hydropneumatique).

Le groupe électropneumatique **7** peut inclure en outre une ou plusieurs électrovannes qui seront discutées plus loin. Les électrovannes peuvent être intégrées au groupe électropneumatique ou peuvent être situées à distance du groupe électropneumatique.

Il est prévu des conduites pneumatiques collectivement repérées par la référence **74** pour acheminer l'air comprimé vers les unités de pulvérisation **1**, via le cas échéant une ou plusieurs vannes pneumatiques ou électropneumatiques qui seront discutées dans la suite.

La figure 2 illustre de manière schématique le système hydraulique et pneumatique mis à contribution dans le système de pulvérisation.

Le système de pulvérisation comprend une unité de commande repérée **15**, en charge dans l'exemple illustré de commander le moteur du compresseur pneumatique et le moteur de la pompe du liquide. Il est prévu un pupitre de commande **25** ou équivalent permettant à un opérateur de déclencher le démarrage ou l'arrêt d'une séquence de pulvérisation. Le cas échéant, le pupitre de commande **25** permet de définir des groupes ou sous-ensemble de buses à inhiber ponctuellement ou temporairement, et de commander en conséquence les électrovannes pneumatiques correspondantes.

Par ailleurs, il est prévu, pour le fonctionnement de l'unité de commande, différents capteurs **16** et/ou boutons poussoirs **17**, par exemple des capteurs de pression, des capteurs de température, des capteurs de niveau, des boutons d'activation, de marche/arrêt, comme connu en soi, donc non décrits en détail ici.

On a représenté à la figure 2 une seule colonne de pulvérisation **C1** qui est alimentée d'une part au moyen d'une canalisation de liquide **94**, et d'autre part au moyen d'une ou deux conduites pneumatiques **74**, selon plusieurs modes possibles de réalisation qui seront vus ci-après.

Il est prévu une électrovanne pneumatique **4** qui permet d'alimenter la colonne de pulvérisation en air comprimé. On remarque qu'il peut être prévu une autre ou plusieurs autres électrovannes pneumatiques **4'** en parallèle pour alimenter d'autres colonnes de pulvérisation.

Il est prévu une vanne **6** qui permet d'alimenter en liquide de traitement la colonne de pulvérisation. On remarque qu'il peut être prévu une autre ou plusieurs autres vannes **6'** en parallèle pour alimenter en liquide de traitement d'autres colonnes de pulvérisation.

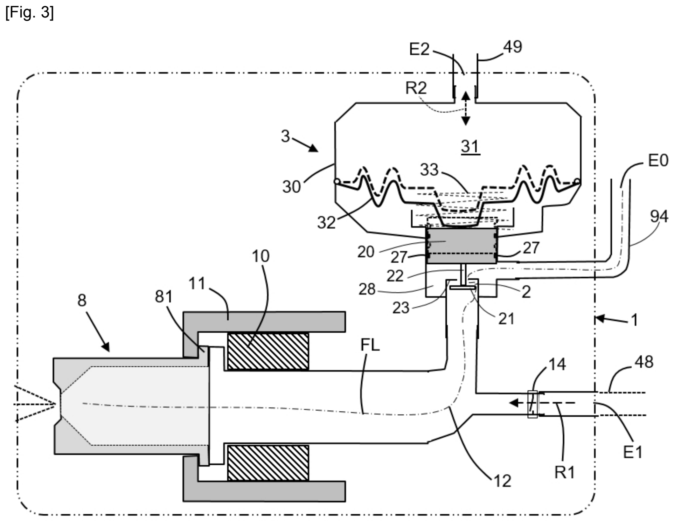

En référence à la figure 3, l'unité de pulvérisation **1** comprend une buse de pulvérisation **8** et une vanne à commande pneumatique **3** qui permet d'envoyer sélectivement le liquide de traitement sous pression vers la buse ou pas.

En outre, l'unité de pulvérisation **1** comprend une arrivée de liquide notée **E0**, et un canal de délivrance **12** s'étendant depuis l'arrivée de liquide jusqu'à la buse en passant par un passage obturable **2.**

Dans ce premier exemple de réalisation, la vanne à commande pneumatique **3** est de type normalement fermé.

L'unité de pulvérisation **1** comprend une première entrée pneumatique **E1** qui sera discutée plus loin.

La vanne à commande pneumatique **3** comprend une chambre pneumatique **31** ('poumon') délimitée par une membrane **32** et un corps de vanne **30**. Le corps de vanne peut être par exemple généralement cylindrique. La membrane **32** se présente comme un disque souple, ancrée à sa bordure périphérique sur le corps de vanne.

La chambre pneumatique **31** est en communication fluide avec une deuxième entrée pneumatique **E2** issue de la conduite d'air comprimé **49** qui arrive jusqu'à l'unité de pulvérisation.

Dit autrement, la vanne à commande pneumatique est alimentée par la deuxième entrée pneumatique E2.

Dans l'exemple illustré, il est prévu un piston **20** avec un ou deux joint toriques **27** périphériques. Le piston **20** sépare la partie pneumatique (au dessus) de la partie hydraulique (au dessous). La zone centrale de la membrane souple est reliée au piston **20**. Ainsi, le piston **20** est entrainé dans son mouvement de coulissement vertical par la membrane souple 32.

A la base de la vanne, il est prévu un passage obturable **2**, avec une soupape **21** et un siège de soupape **23**. Plus précisément, une tige de commande **22** est fixée d'une part au piston 20 et d'autre part au centre de la soupape **21**, la tige 22 traverse le siège de soupape **23** qui est de forme annulaire.

La membrane souple 3 est sollicitée vers le haut à l'encontre de la pression pneumatique au moyen d'un ressort hélicoïdal **33**. La membrane souple **3** entraine avec son mouvement le piston **20** et la soupape **21**.

Ainsi, lorsque la chambre pneumatique n'est pas pressurisée, c'est à dire n'est pas alimentée en air comprimée, la membrane souple **32** et le piston sont rappelés vers le haut par le ressort de rappel 33 et la soupape 21 vient se plaquer contre le siège de soupape 23 obturant ainsi le passage obturable.

A l'inverse, lorsque la chambre pneumatique est alimentée en air comprimé, la membrane souple **32** est déplacée vers le bas par la pression pneumatique à l'encontre du ressort (qui est alors comprimé), le piston **20** est déplacé vers le bas et le passage entre la soupape **21** et le siège de soupape **23** est libéré. Il s'établit alors un flux de liquide noté **FL** depuis l'entrée du liquide **E0** jusqu'au canal de délivrance **12** puis jusqu'à la buse de pulvérisation **8**. Le liquide passe alors depuis la chambre annulaire **28** située autour de la tige **22** par le siège de soupape ouvert et en direction de la buse **8.**

Exprimé autrement, la zone centrale de la membrane souple est déplaçable entre une première position provoquant l'obturation du passage obturable **2** (état représenté en traits pointillés à la figure 3) et une deuxième position provoquant la libération dudit passage obturable (état représenté en trait plein).

Alternativement, le ressort de rappel 33 pourrait être placé sous le piston, dans le compartiment liquide et pourrait alors pousser le piston vers le haut.

En outre, la première entrée pneumatique **E1** de l'unité de pulvérisation, déjà mentionnée, est raccordée au canal de délivrance **12**. Un piquage est prévu dans l'unité de pulvérisation pour l'arrivée d'air de soufflage.

Avantageusement, la première entrée pneumatique **E1** est raccordée au canal de délivrance via un clapet anti-retour **14**.

Le clapet anti-retour **14** laisse passer de l'air depuis la première entrée pneumatique **E1** vers le canal de délivrance mais empêche du liquide se trouvant dans le canal de délivrance **12** de remonter vers la première entrée pneumatique **E1**.

Selon un exemple de réalisation, le clapet anti-retour **14** comprend un organe formant clapet déplaçable entre une position fermée dans lequel cet organe est plaqué contre un siège de clapet et une position d'ouverture dans lequel l'organe formant clapet est éloigné du siège de clapet. Il est possible aussi d'utiliser un clapet anti-retour sous forme de bille reçue dans une portée conique et rappelée par un petit ressort de rappel.

Le clapet anti-retour **14** peut être calibré pour s'ouvrir sous une différence de pression comprise entre 500 millibar et 2 bar du côté de la première entrée pneumatique **E1**.

On remarque que le flux d'air qui traverse le clapet anti-retour, noté **R1**, est monodirectionnel, alors que le flux d'air **R2** qui prévaut au niveau de la deuxième entrée E2 est bidirectionnel. Le flux d'air **R2** est entrant pour gonfler la chambre pneumatique et est refoulé (sortant) dans la direction inverse lorsque la chambre voit sa pression baisser.

En outre, l'unité de pulvérisation **1** comprend un corps d'unité **10** formant une structure sur laquelle est fixée la buse **8.** La vanne à commande pneumatique 3 est elle aussi fixée au corps d'unité **10.** Le corps d'unité **10** peut comprendre des pattes de fixation ou d'autres éléments accessoires.

Il est prévu une bride **11** qui vient serrer une collerette **81** appartenant à la buse pour maintenir la buse sur le corps d'unité **10**. La buse est ainsi remplaçable si nécessaire.

Dans l'exemple illustré, le canal de délivrance **12** est formé directement dans le corps d'unité **10**.

On a représenté à la figure 4 les circuits de liquide et pneumatique qui desservent deux unités de pulvérisation.

L'électrovanne pneumatique **4** reçoit une commande électrique en provenance de l'unité de commande **15** via la ligne de commande **13**.

L'électrovanne pneumatique comprend un tiroir déplaçable, autrement appelé noyau, qui est déplacé à l'intérieur d'un corps cylindrique d'électrovanne, comme connu en soi, sous l'effet d'un d'effort généré par une force électromagnétique induite par le courant qui passe dans la bobine et sous l'effet d'un effort antagoniste procuré par un ressort de rappel **40**.

Il est prévu des ports sur le corps cylindrique qui reçoit le tiroir.

Un premier port **41** reçoit l'air comprimé en provenance du compresseur pneumatique **71** via la conduite **74**. Un deuxième port **42** forme la sortie vers les unités de pulvérisation, plus précisément les chambres pneumatiques **31** via la conduite **49**. Un troisième port **43**, qui correspond normalement à l'évent d'évacuation à l'air libre, est ici astucieusement raccordé aux premières entrées pneumatiques **E1** des unités de pulvérisation, via une conduite de détournement repérée **48**.

L'électrovanne pneumatique **4** est de type 3/2 (deux positions, trois ports).

La partie notée 4A de la figure 4 représente l'électrovanne dans son état activé par la bobine alors que la partie notée 4B représente l'électrovanne dans un état inactif, c'est-à-dire au repos sous l'effet du ressort de rappel.

Dans l'état activé, l'orifice **47** du noyau fait communiquer le premier port **41** avec le deuxième port **42** et fournit de l'air comprimé à la chambre pneumatique **31** via la conduite **49** et la deuxième entrée d'air **E2**.

Dans l'état inactivé au repos, l'orifice **46** du noyau fait communiquer le deuxième port **42** avec le troisième port **43** et la conduite de détournement repérée **48.**

Le volume d'air qui était stocké dans la chambre pneumatique **31** n'est donc pas évacué à l'air libre mais redirigé vers la première entrée **E1** de l'unité de pulvérisation afin de pousser le liquide qui se trouve dans le canal de délivrance **12** vers l'extérieur via l'orifice de buse.

Le volume d'air stocké dans la chambre pneumatique **31** représente une réserve d'air suffisante pour purger le canal de délivrance **12**.

Autrement dit, grâce à la conduite de détournement **48**, un envoi d'air via la première entrée pneumatique **E1**, lorsque le passage obturable est obturé, permet de purger le canal de délivrance **12** et la buse **8**.

On note que lorsque l'électrovanne pneumatique **4** est activée, le troisième port 43 se trouve en face d'une paroi fermée (représenté par un cul-de-sac **44**) isolant ainsi la conduite de détournement **48** qui reste préservée de toute pollution extérieure.

La figure 7 illustre un chronogramme de séquence d'interruption de pulvérisation sur une unité de pulvérisation. La pression **PR1** est la pression qui règne dans la première entrée pneumatique **E1**. La pression **PR2** est la pression qui règne dans la deuxième entrée pneumatique **E2** et dans la chambre pneumatique **31.**

**À** l'instant **t1**, la commande électrique **45** de l'électrovanne **4** passe de On à Off. Le tiroir est alors rappelé à sa position de repos par le ressort **40.** L'arrivée d'air en provenance du compresseur est stoppée. L'air qui était contenu dans le poumon s'écoule par la conduite de détournement **48** vers les premières entrées pneumatiques **E1** des unités de pulvérisation. On a alors **PR2 = PR1**.

À l'instant **t2**, la majorité du liquide qui était contenu dans le canal de délivrance 12 a été chassé par la buse et l'air peut directement sortir par l'orifice de buse, ce qui fait chuter rapidement la pression d'air qui tend alors vers 0.

En référence à un deuxième exemple de réalisation représenté à la figure 5, l'unité de pulvérisation **1** comprend une buse de pulvérisation 8 et une vanne à commande pneumatique **3** qui est de type normalement ouvert, à l'inverse de la configuration illustrée à la figure 3.

Les éléments qui ne sont pas décrits à nouveau ici sont identiques ou similaires à ceux qui ont été décrits en référence à la figure 3.

Comme précédemment, l'électrovanne pneumatique **4** commande la vanne à commande pneumatique **3**, selon la logique déjà exposée, avec l'effet inverse sur le passage obturable. Lorsque l'électrovanne pneumatique **4** est excitée, le passage **2** est fermé, alors que lorsque l'électrovanne pneumatique 4 est au repos, le passage 2 est ouvert.

Toutefois, cette électrovanne pneumatique n'est pas mise à contribution pour le soufflage d'air à des fins de purge de la buse ; il est prévu pour ceci une autre électrovanne, spécifique à la purge de la buse, et repérée **5**.

Lorsque la chambre pneumatique n'est pas pressurisée, c'est à dire n'est pas alimentée en air comprimée, la membrane souple **32** est rappelée vers le haut par le ressort de rappel 33. Le piston est aussi par le fait rappelé vers le haut. Le passage obturable **2** est alors ouvert. Il s'établit alors un flux de liquide noté **FL** depuis l'entrée du liquide **E0** jusqu'au canal de délivrance **12**. Le flux de liquide **FL** passe depuis l'extérieur vers l'intérieur de la conduite **26**.

A l'inverse, lorsque la chambre pneumatique est alimentée en air comprimé, la membrane souple **32** est déplacée vers le bas par la pression pneumatique à l'encontre du ressort (qui est alors comprimé). Dans cette position, la zone centrale de la membrane pousse le piston 20 qui vient plaquer contre un siège annulaire **29**, et en conséquence vient obturer le passage obturable **2**. Le flux de liquide **FL** est alors interrompu.

C'est donc le piston **20** qui fait office de soupape, sous l'effet des mouvements impartis à la membrane souple 3 par la pression régnant dans la chambre pneumatique 31.

La figure 6 montre la fonction de l'électrovanne spécifique **5** agissant sur la purge.

La partie notée 6A de la figure 6 représente l'électrovanne spécifique **5** dans un état inactif c'est-à-dire au repos sous l'effet du ressort de rappel alors que la partie notée 6B représente l'électrovanne spécifique **5** dans son état activé par la bobine.

Il est prévu des ports sur le corps cylindrique qui reçoit le tiroir. Un premier port **51** reçoit l'air comprimé en provenance de la ligne d'air comprimé **75.** Un deuxième port **52** forme la sortie vers premières entrées pneumatiques E1 des unités de pulvérisation, via la ligne d'air **58.**

En temps normal, l'électrovanne spécifique 5 n'est pas alimentée et son deuxième port **52** est relié à une paroi fermée **59,** de manière à préserver l'intégrité et la propreté des conduites d'alimentation **58** des premières entrées pneumatiques **E1.**

L'électrovanne spécifique **5** n'est commandée que lorsqu'il existe un besoin de purger le canal de délivrance et la goutte de l'orifice de buse.

Lorsque l'électrovanne spécifique **5** est excitée ou activée (croquis 6B), le premier port **51** est mis en relation communication fluide avec le deuxième port **52** et l'air comprimé est dirigé depuis la ligne d'air comprimé **75** vers les conduites d'alimentation des premières entrées pneumatiques **E1** via la ligne d'air **58** pour purger le canal de délivrance et la buse.

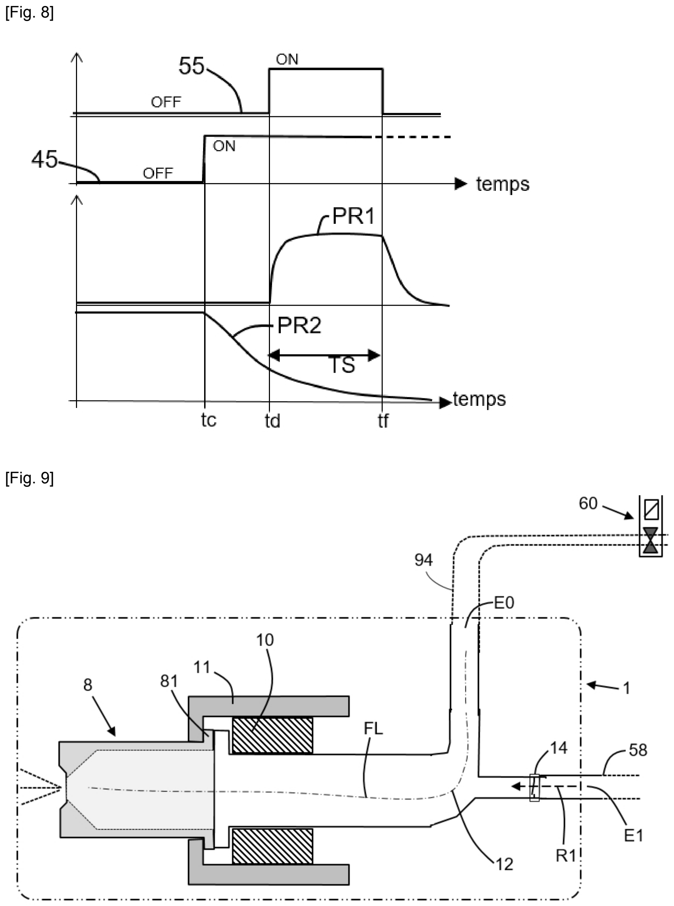

A la figure 8, le signal **55** correspond à l'excitation de l'électrovanne spécifique **5.**

L'instant **tc** correspond au moment de l'interruption de la commande sur l'électrovanne pneumatique **4** de commande du poumon **31** de la vanne pneumatique 3. La pression **PR2** dans la chambre **31** diminue à partir de ce moment.

L'instant **td** correspond au début de la séquence de soufflage, moment où l'électrovanne spécifique **5** est commandée par le signal **55** et passe à l'état activé (de OFF vers ON).

La pression **PR1** augmente brutalement jusqu'à l'instant **tf** où l'électrovanne spécifique 5 est désactivée et repasse à l'état de repos (de ON vers OFF). La durée de soufflage notée **TS**, cf figure 8, peut être avantageusement paramétrable dans l'unité de commande 15.

La figure 9 montre un autre exemple de réalisation d'une unité de pulvérisation 1, dépourvue de vanne locale pour la distribution de liquide. La vanne qui autorise le passage du fluide ou interrompt la délivrance du fluide, notée **60**, se situe à distance par exemple dans le collecteur commun d'un tronçon de distribution.

Pour le reste, l'unité de pulvérisation 1 est identique ou similaire, mutatis mutandis, à ce qui a été décrit précédemment au sujet des figures 5 et 6, mais sans présence de vanne de commande locale, l'entrée **E0** est mise en communication permanente avec le canal de délivrance **12**.

En considérant la solution de type normalement ouvert représentée aux figure 5 et 6, l'invention couvre aussi, mutatis mutandis, le cas d'une vanne à commande électrique au lieu d'une vanne à commande pneumatique.

En général, la vanne à commande pneumatique 3 pourrait être différente de celle représentée aux figures 3 et 5 : d'autres types de vanne à commande pneumatique peuvent être utilisés, notamment avec des pistons rigides et des tiges de liaison.

De même la chambre de liquide à l'intérieur de l'unité de pulvérisation pourrait être différente de celle représentée.

On notera par ailleurs que l'invention n'est pas limitée aux modes de réalisations décrits précédemment. Il apparaîtra en effet à l'homme du métier que diverses modifications peuvent être apportées aux modes de réalisations décrits ci-dessus, à la lumière de l'enseignement qui vient de lui être divulgué.

Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme du métier en appliquant ses connaissances générales à la mise en œuvre de l'enseignement qui vient de lui être divulgué.

## Revendications

1. **Unité de pulvérisation** (1) sélective de liquide comprenant une arrivée de liquide (E0), une buse de pulvérisation (8), un canal de délivrance (12) s'étendant depuis l'arrivée de liquide jusqu'à la buse de pulvérisation, **caractérisé en ce que** l'unité de pulvérisation comprend une première entrée pneumatique (E1) raccordée au canal de délivrance via un clapet anti-retour (14), de sorte qu'un envoi d'air via la première entrée pneumatique, lorsque l'arrivée de liquide ne délivre plus de liquide, permet de purger le canal de délivrance et la buse, et **en ce que** ledit canal de délivrance (12) s'étend depuis l'arrivée de liquide jusqu'à la buse de pulvérisation en passant par un passage obturable (2), une vanne à commande pneumatique (3) avec une chambre pneumatique (31) délimitée par une membrane (32) et alimentée par une deuxième entrée pneumatique (E2), la membrane étant déplaçable entre une première position provoquant l'obturation du passage obturable et une deuxième position provoquant la libération dudit passage obturable, de sorte qu'un envoi d'air via la première entrée pneumatique, lorsque le passage obturable est obturé, permet de purger le canal de délivrance et la buse.

2. Unité de pulvérisation (1) selon la revendication 1, dans laquelle la vanne à commande pneumatique est de type normalement fermé.

3. Unité de pulvérisation (1) selon la revendication 1, dans laquelle la vanne à commande pneumatique est de type normalement ouvert.

4. Unité de pulvérisation (1) selon l'une des revendications 1 à 3, comprenant en outre un corps d'unité (10) formant une structure sur laquelle sont fixées la buse et la vanne à commande pneumatique.

5. Unité de pulvérisation (1) selon l'une des revendications 1 à 4, dans laquelle le canal de délivrance (12) est agencé et formé dans le corps d'unité.

6. **Système de pulvérisation** (100) comprenant une pluralité d'unités de pulvérisation selon l'une des revendications 1 à 5, et au moins une électrovanne pneumatique (4,5) alimentant sélectivement en air comprimé les premières entrées pneumatiques (E1) des d'unités de pulvérisation (1).

7. Système de pulvérisation selon la revendication 6, dans lequel l'électrovanne pneumatique (4) est une électrovanne pneumatique 3/2 avec l'orifice de purge raccordé aux premières entrées pneumatiques (E1) des unités de pulvérisation (1).

8. Système de pulvérisation selon la revendication 6, dans lequel l'électrovanne pneumatique est une électrovanne pneumatique spécifique (5).

9. Système de pulvérisation selon l'une des revendications 6 à 8, comprenant plusieurs unités de pulvérisation (1) agencées fonctionnellement en parallèle par groupes ou sous-ensembles.

10. Système de pulvérisation selon l'une des revendications 6 à 9, comprenant au moins une vanne de délivrance (6,60) du produit de traitement.
